# EUROPEAN PATENT SPECIFICATION

(11) **EP 2 057 922 B1**
(45) Date of publication and mention of the grant of the patent: **09.04.2014**
(21) Application number: 07712564.9
(22) Date of filing: 12.02.2007
(51) Int. Cl.: A47J 19/02

(54) **CITRUS FRUIT SQUEEZER**
ZITRUSFRUCHTPRESSE
PRESSE-AGRUMES

(30) Priority: 31.08.2006 ES 200602267
(43) Date of publication of application: 13.05.2009
(73) Proprietor: Lekué, SL, 08120 La Llagosta Barcelona (ES)
(72) Inventor: HUBER, Lukas Werner, 08120 La Llagosta, Barcelona (ES)
(74) Representative: Gislon, Gabriele
(86) International application number: PCT/ES2007/000074
(87) International publication number: WO 2008/025861

(56) References cited:
- DE-A1- 19 953 642
- GB-A- 339 893
- US-A- 1 676 102
- US-A- 2 014 236
- US-A- 2 175 052
- US-A- 2 688 914
- US-A- 2 707 912
- US-A- 2 781 720
- US-A- 3 159 096
- US-A- 3 207 610
- US-A- 3 264 975

## Description

### Technical Field

The present invention relates to a citrus fruit squeezer in the form of a cavity of a flexible material adapted to receive a cut portion of citrus fruit, which can be squeezed by pressing the cavity with the hand. The squeezed juice exits through an outlet in the base of the cavity.

### Background of the invention

To obtain citrus fruit juice a citrus fruit, for example a lemon, is generally cut in half and a half of the citrus fruit is squeezed by gripping it directly with the hand, either with the aid of a squeezer in the form of a convex prominence which is elevated from a juice collection plate or without the aid of any utensil, in which case the juice is collected in a container arranged under the half of the lemon which is being squeezed with the hand. This process has several drawbacks. In the first place, the contact of the hand with the citrus fruit juice is unhygienic and furthermore the fingers can get sticky causing an unpleasant and/or uncomfortable effect and/or feeling. Furthermore, with this process it is difficult or impossible to separate the pips from the juice in the same act of squeezing half the citrus fruit, therefore the pips must be separated in a subsequent operation.

Frequently, especially when the citrus fruit juice is used as a condiment or dressing, the amount of lemon juice required at a given time is less than the amount that can be extracted from half a citrus fruit, therefore the half of the citrus fruit is only partially squeezed. In this case, the partially squeezed half of citrus fruit can be stored for a subsequent use. However, a partially squeezed half of citrus fruit is difficult to store in acceptable hygienic conditions, therefore the partially squeezed half of citrus fruit is often simply thrown away, with the waste that this involves.

Patent JP-A-3039109 discloses a lemon slice squeezer made up of a receptacle inside which there is placed a perforated plate on which a lemon slice is placed. A cover in the form of a flexible sheet is coupled to the receptacle covering the lemon slice. The receptacle has a liquid-receiving and -channelling base provided with an outlet for the squeezed juice. When the flexible sheet of the cover is pressed with the fingers to squeeze the lemon slice, the squeezed lemon juice passes through the perforated plate to the liquid-receiving and -channelling base and exits through the outlet. This squeezer allows squeezing in good hygienic conditions. However, one drawback of this squeezer is that it is limited to round slices of lemon and does not allow squeezing other portions of fruit, for example, halves of lemon or other citrus fruits. Another drawback is that this squeezer is made up of at least three pieces with different mechanical requirements, and this involves higher production and marketing costs than those required, for example, for a squeezer made of one piece of a uniform material.

Patent US-A- 2014236 describes a juice extractor and feeder comprising an elastically expansible receptacle which is shaped and sized to be capable of encompassing and gripping more than a half of a citrus fruit, said receptacle having an opening through which a citrus fruit can be inserted into. A nipple having one or more outlet openings is connected to the receptacle and in communication with the interior thereof, and a strainer is arranged between the receptacle and the nipple. A drawback with this juice extractor and feeder is that the mentioned opening for inserting the citrus fruit is narrower than the receptacle, thus making it difficult to insert the citrus fruit into. Another drawback is the two-part construction, since the strainer is a relatively rigid part separate from the receptacle and the nipple, which can be jointly provided as another part made of an elastic material.

On the other hand, patent US-A-2175052, which belongs to the public domain, describes a cap for a dispensing container adapted to have pressure formed therein. The container includes a diaphragm valve comprising a diaphragm convex towards the inside of the container in the absence of pressure. A slit is formed in the diaphragm. The diaphragm is adapted to be flexed outwardly by the pressure exerted from inside the container by the product contained therein, which causes the slit to be opened up and provide a discharge opening for the product. When the pressure inside ceases, the stress existing in the material of the diaphragm makes the diaphragm recover its position convex towards the inside of the container, thereby closing the slit.

### Disclosure of the Invention

One object of the present invention is to provide a citrus fruit squeezer which allows squeezing a portion of the citrus fruit with the hand preventing contact of the hand with the squeezed juice, which is able to separate and retain the pips from the juice, including means for closing a juice outlet, and allowing storing a partially squeezed portion of citrus fruit in acceptable hygienic conditions.

Another objective of the present invention is to provide a citrus fruit squeezer fulfilling the previous objectives and which is made of one piece of a very hygienic flexible material suitable for alimentary uses.

The present invention contributes to achieving the previous and other objectives by providing a citrus fruit squeezer of the type comprising a cavity adapted to receive a cut portion of citrus fruit, a flexible sheet which can be pressed against a cut portion of citrus fruit to squeeze it, and a liquid-receiving and -channelling element provided with an outlet for the squeezed juice. Said flexible sheet is in the form of a flexible annular side wall adapted to surround said cut portion of citrus fruit wrapping it, and said liquid-receiving and -channelling element is connected at one perimeter to a first edge of said flexible annular side wall to form a bottom for said cavity, a second edge of the flexible annular side wall forming a mouth for the cavity. The citrus fruit squeezer of the present invention is characterised in that the flexible annular side wall defines a narrowed waist between said first edge connected to the liquid-receiving and - channelling element and said second edge defining said mouth.

With this construction, a portion of citrus fruit, for example half a lemon, can be inserted into the cavity, preferably with the cut part facing the liquid-receiving and -channelling element, and the flexible annular side wall can be squeezed with the hand against the portion of citrus fruit contained in the cavity to squeeze it. The juice produced is collected by the liquid-receiving and - channelling element and dispensed through the outlet. The outlet is dimensioned so as to retain the pips of the cut portion of citrus fruit, therefore the juice exits free of pips and in suitable hygienic conditions since at no time has it come into contact with the hand. The hand accordingly remains free of the sticky effect of the citrus fruit juice.

Advantageously, the flexible annular side wall and the liquid-receiving and -channelling element are integral parts of one piece which is moulded from a flexible polymer which, in a preferred embodiment, is platinum-catalysed silicone. This material is elastic, very hygienic and very suitable for alimentary uses.

A plurality of axial folds can be arranged around said narrowed waist, forming a puckering in the flexible annular side wall. The dimension inside the cavity in the area of the narrowed waist can therefore be, in a resting state, significantly narrower than the outer dimension of the cut portion of citrus fruit. Due to the elasticity of the material, eventually in cooperation with the puckering provided by the folds, the narrowed waist can increase its inner dimension enough to allow inserting the cut portion of citrus fruit, and the flexible annular side wall is elastically pressed against the cut portion of citrus fruit when the same is placed in position inside the cavity substantially preventing the entry of air into the cavity and the exit of juice between the flexible annular side wall and the cut portion of citrus fruit.

In exemplary embodiments, the citrus fruit squeezer of the present invention includes means for closing the juice outlet. A portion of partially squeezed citrus fruit can thus be left inside the cavity of the citrus fruit squeezer with the outlet closed and can be stored, preferably in the refrigerator, in acceptable hygienic conditions for a reasonable period of time. One and the same cut portion of citrus fruit can therefore be partially squeezed consecutively a number of times. In a similar way, a partially squeezed portion of citrus fruit housed inside the cavity of the citrus fruit squeezer with the outlet closed can be deposited on a surface, for example, a shelf of the refrigerator or the work surface of the kitchen, without the risk that the cut portion of citrus fruit will become contaminated or that the surface will become dirtied by the citrus fruit juice.

### Brief Description of the Drawings

The foregoing and other features and advantages will be more fully understood from the following detailed description of exemplary embodiments with reference to the attached drawings, in which:
Figure 1 is a side view of a citrus fruit squeezer according to an embodiment of the present invention;
Figure 2 is an upper view of the citrus fruit squeezer of Figure 1;
Figure 3 is a cross section view taken along a plane indicated by line III-III of Figure 1;
Figure 4 is a cross section view showing the adaptation of the citrus fruit squeezer to half a lemon inserted into its cavity;
Figure 5 is a cross section view of a citrus fruit squeezer according to another embodiment of the present invention including a diaphragm valve in the juice outlet;
Figure 6 is an enlarge view of detail VI of Figure 5 in which the diaphragm valve is shown in the closed position;
Figure 7 is an enlarged view similar to Figure 6 with the diaphragm valve in the open position; and
Figure 8 is a side view of a citrus fruit squeezer according to another additional embodiment of the present invention including a cap for the juice outlet.

### Detailed Description of Exemplary Embodiments

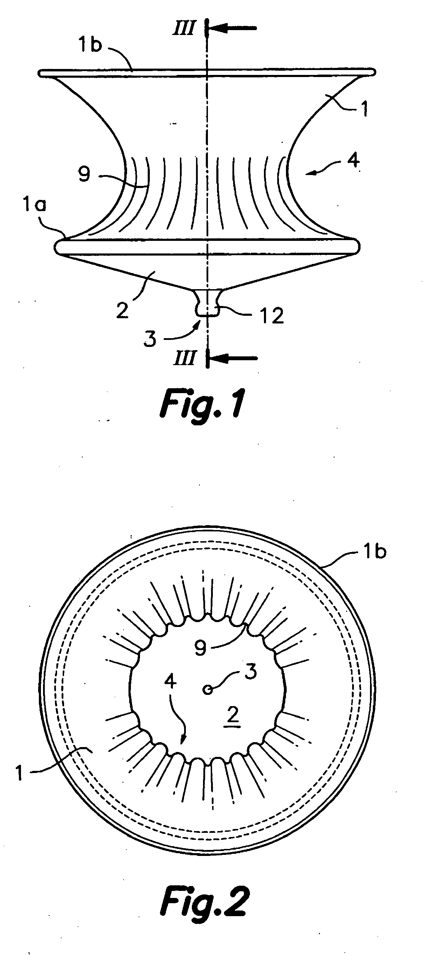

Referring first to Figures 1 to 4, the citrus fruit squeezer of the present invention comprises, in a basic embodiment, a flexible sheet in the form of a flexible annular side wall 1 attached to a liquid-receiving and - channelling element 2 to form a cavity adapted to receive a cut portion of citrus fruit. The flexible annular side wall 1 has the form of a sleeve with a first annular edge 1a connected to a perimeter of said liquid-receiving and -channelling element 2 and a second opposite annular edge 1b, whereby the liquid-receiving and -channelling element 2 forms a base for the cavity and the second annular edge 1b a mouth edge. The liquid-receiving and -channelling element 2 has a shape slightly depressed towards its central area where there is an outlet 3 for the squeezed juice, which can be formed in a spout 12. The outlet 3 is dimensioned so as to not allow the pips of the cut portion of citrus fruit to pass. The flexible sheet formed by the flexible annular side wall 1 is adapted to surround said portion of citrus fruit placed inside the cavity wrapping it, and it can be pressed with the hand against the portion of citrus fruit to squeeze it. The resulting juice is collected by the liquid-receiving and -channelling element 2 and channelled so that it exits through the outlet 3, whereas the pips are retained inside the cavity by virtue of the suitable dimension of the outlet 3.

The flexible annular side wall 1 and the liquid-receiving and -channelling element 2 are preferably integral parts of one piece which is moulded from a flexible polymer. More specifically, said flexible polymer can be platinum-catalysed silicone.

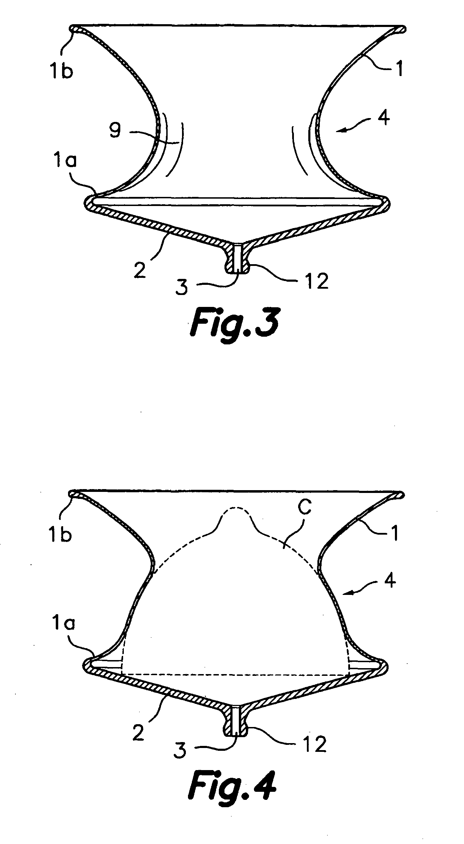

In the embodiments shown, the flexible annular side wall 1 defines a narrowed waist 4 between the first annular edge 1a connected to the liquid-receiving and -channelling element 2 and the second mouth edge 1b. Furthermore, a plurality of axial folds 9 can be arranged around said narrowed waist 4, forming a puckering in the flexible annular side wall 1. As Figure 4 shows, by virtue of the elasticity of the material and, if it is provided, with the collaboration of the puckering provided by the axial folds 9, the narrowed waist 4 can be forced to increase in dimension enough to allow inserting a cut portion of citrus fruit C, for example, half a lemon, into the cavity, which is designed to receive the cut portion of citrus fruit C with its cut part facing the liquid-receiving and -channelling element 2. Once the cut portion of citrus fruit C is in position inside the cavity, the elasticity of the material maintains the narrowed waist 4 of the flexible annular side wall 1 pressed against the rind or other part of the cut portion of citrus fruit C.

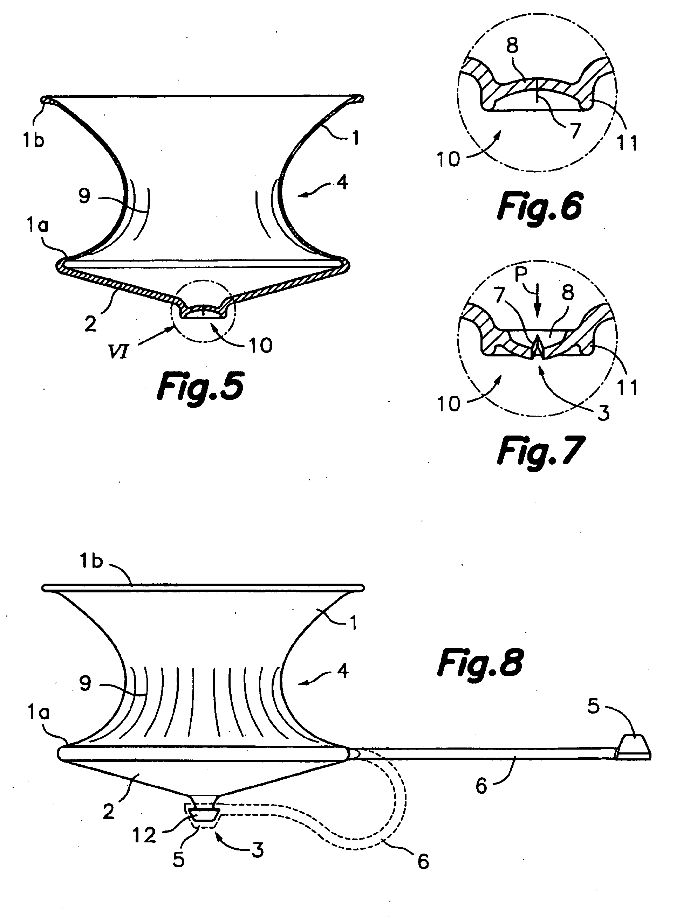

Figures 5 to 7 show another embodiment of the citrus fruit squeezer of the present invention, including a diaphragm valve 10 based on the operating principle described in the mentioned patent US-A-2175052, belonging to the public domain, for closing the outlet 3. The valve 10 is formed integrally in the liquid-receiving and -channelling element 2 such that the citrus fruit squeezer is made of one piece which is moulded from a flexible polymer, such as platinum-catalysed silicone. The valve 10 comprises a portion in the form of a diaphragm 8 which, in the absence of pressure inside the cavity, is convex towards the inside of the cavity. A slit 7 is formed in the portion in the form of a diaphragm 8, which slit remains closed by the stress of the material, whereas the portion in the form of a diaphragm 8 is in its position convex towards the inside of the cavity (Figure 6). The portion in the form of a diaphragm 8 is adapted to be flexed outwardly by internal pressure P exerted by the squeezed juice from inside the cavity. When the portion in the form of a diaphragm 8 is flexed outwardly (Figure 7) due to the effect of the internal pressure P, the slit 7 is opened up to provide the juice outlet 3. When the internal pressure P ceases, the stress of the material returns the portion in the form of a diaphragm 8 to its position convex towards the inside of the cavity (Figure 6) and the slit 7 is closed again, closing the outlet 3. The portion in the form of a diaphragm 8 preferably extends in a circular space defined by an annular rib 11 protruding outwardly configured in a central area of the liquid-receiving and -channelling element 2.

According to an alternative embodiment (not shown), the slit 7 can be formed directly in a central area of the liquid-receiving and -channelling element 2 and adapted to be opened up by elastic deformation of the material of the liquid-receiving and -channelling element 2 as a result of the pressure exerted by the squeezed juice from inside the cavity to provide the outlet 3, such that the liquid-receiving and -channelling element 2 acts as the diaphragm. Likewise, several crossing or convergent slits rather than one can be arranged in any embodiment.

Figure 8 shows another alternative embodiment in which the outlet 3 is formed in a spout 12 adapted to be closed by means of a cap 5. For the purpose of preventing the mentioned cap 5 from being lost, the cap 5 is attached to the cavity by means of a flexible connection cord 6. Both the cap 5 and said connection cord 6 are integral parts of the same piece forming the flexible annular side wall 1 and the liquid-receiving and -channelling element 2, such that the citrus fruit squeezer is made of one piece which is moulded from a flexible polymer, such as platinum-catalysed silicone. The flexible connection cord 6 can be flexed to couple the cap 5 to the spout 12 of the outlet 3, as shown with dotted lines in Figure 8. When the cap 5 is removed, the stress of the flexible material of the connection cord 6 keeps the cap 5 away from the outlet 3.

A person skilled in the art will be able to introduce modifications and variations in the embodiments shown and described without departing from the scope of the present invention as it is described in the attached claims.

## Claims

1. A citrus fruit squeezer of the type comprising a cavity adapted to receive a cut portion of citrus fruit, with a flexible annular side wall (1) configured to surround and wrap said cut portion of citrus, and able to be pressed against said cut portion of citrus fruit to squeeze it, and a liquid-receiving and -channelling element (2) provided with an outlet (3) for the squeezed juice, said flexible annular side wall (1) having a first edge (1a) connected to a perimeter of said liquid-receiving and -channelling element (2), which forms a bottom for said cavity, and a second opposite edge (1b) which forms a mouth for the cavity, **characterised in that** the flexible annular side wall (1) defines a narrowed waist (4) between said first edge (1a) connected to the liquid-receiving and -channelling element (2) and said second edge (1b) forming said mouth.

2. The citrus fruit squeezer according to claim 1, **characterised in that** the flexible annular side wall (1) and the liquid-receiving and -channelling element (2) are integral parts of one piece which is moulded from a flexible polymer.

3. The citrus fruit squeezer according to claim 1 or 2, **characterised in that** a plurality of axial folds (9) are arranged around said narrowed waist (4), forming a puckering in the flexible annular side wall (1).

4. The citrus fruit squeezer according to claim 1 or 2, **characterised in that** said outlet (3) is dimensioned so as to retain pips of the cut portion of citrus fruit.

5. The citrus fruit squeezer according to claim 4, **characterised in that** the outlet (3) has the form of at least one slit (7) adapted to be opened up by elastic deformation of the material of the liquid-receiving and -channelling element (2) as the result of pressure exerted by the squeezed juice from inside the cavity.

6. The citrus fruit squeezer according to claim 5, **characterised in that** said at least one slit (7) is formed in a portion in the form of a diaphragm (8) defined in the liquid-receiving and - channelling element (2), said portion in the form of a diaphragm (8) being convex towards the inside of the cavity in the absence of pressure and adapted to be flexed outwardly by said pressure exerted by the squeezed juice from inside the cavity.

7. The citrus fruit squeezer according to claim 4, **characterised in that** the outlet (3) is formed in a spout (12) adapted to be closed by means of a cap (5).

8. The citrus fruit squeezer according to claim 7, **characterised in that** said cap (5) is attached to the cavity by means of a flexible connection cord (6), the cap (5) and said connection cord (6) being integral parts of the same piece forming the flexible annular side wall (1) and the liquid-receiving and -channelling element (2).

9. The citrus fruit squeezer according to any of claims 2 to 8, **characterised in that** said flexible polymer is platinum-catalysed silicone.

## Patentansprüche

1. Zitrusfruchtpresse der Art, umfassend einen für die Aufnahme einer Portion geschnittener Zitrusfrucht angepassten Hohlraum, mit einer biegbaren, ringförmigen Seitenwand (1), welche dazu ausgebildet ist, die genannte geschnittene Zitrusfruchtportion zu umgeben und einzuhüllen, und welche gegen die genannte Portion geschnittener Zitrusfrucht gedrückt werden kann, um diese auszupressen, und umfassend ein Flüssigkeitsaufnahme- und -leitungselement (2), welches mit einem Austritt (3) für den ausgepressten Saft versehen ist, wobei die genannte biegbare, ringförmige Seitenwand (1) einen ersten Rand (1 a) aufweist, welcher mit einem Umfang des genannten Flüssigkeitsaufnahme- und - leitungselements (2) verbunden ist, welcher einen Boden für den genannten Hohlraum bildet, und einen zweiten entgegengesetzten Rand (1b) aufweist, welcher eine Öffnung für den Hohlraum bildet, **dadurch gekennzeichnet, dass** die biegbare, ringförmige Seitenwand (1) eine verengte Taille (4) zwischen dem genannten ersten Rand (1a), welcher mit dem Flüssigkeitsaufnahme-und -leitungselement (2) verbunden ist, und dem genannten zweiten Rand (1 b), welcher die genannte Öffnung bildet, definiert.

2. Zitrusfruchtpresse nach Anspruch 1, **dadurch gekennzeichnet, dass** die biegbare, ringförmige Seitenwand (1) und das Flüssigkeitsaufnahme- und - leitungselement (2) Bestandteile eines Stücks sind, welches aus einem biegbaren Polymer gegossen wird.

3. Zitrusfruchtpresse nach Anspruch 1 oder 2, **dadurch gekennzeichnet, dass** eine Vielzahl von axialen Falten (9) um die genannte verengte Taille (4) angeordnet sind, die in der biegbaren, ringförmigen Seitenwand (1) eine Faltung bilden.

4. Zitrusfruchtpresse nach Anspruch 1 oder 2, **dadurch gekennzeichnet, dass** der genannte Austritt (3) so dimensioniert ist, dass er Kerne der geschnittenen Zitrusfruchtportion zurückhält.

5. Zitrusfruchtpresse nach Anspruch 4, **dadurch gekennzeichnet, dass** der Austritt (3) die Form von mindestens einem Schlitz (7) hat, welcher dazu angepasst ist, sich durch die elastische Deformation des Materials des Flüssigkeitsaufnahme-und -leitungselements (2) als Folge eines durch den gepressten Saft vom Inneren des Hohlraumes ausgeübten Drucks zu öffnen.

6. Zitrusfruchtpresse nach Anspruch 5, **dadurch gekennzeichnet, dass** der genannte mindestens eine Schlitz (7) durch einen Teil in Form einer im Flüssigkeitsaufnahme- und -leitungselement (2) definierten Membran (8) geformt ist, wobei dieser Teil in Form einer Membran (8) zum Inneren des Hohlraums in Abwesenheit von Druck konvex ist und dazu angepasst ist, durch den genannten, von dem gepressten Saft verursachten Druck vom Inneren des Hohlraumes nach außen gebogen zu werden.

7. Zitrusfruchtpresse nach Anspruch 4, **dadurch gekennzeichnet, dass** der Austritt (3) als Tülle (12) geformt ist, welche dazu angepasst ist, mit einem Pfropfen (5) geschlossen zu werden.

8. Zitrusfruchtpresse nach Anspruch 7, **dadurch gekennzeichnet, dass** der genannte Pfropfen (5) mit dem Hohlraum durch eine biegbare Verbindungsschnur (6) befestigt wird, wobei der Pfropfen (5) und die genannte Verbindungsschnur (6) Bestandteile desselben Stücks sind, welches die biegbare, ringförmige Seitenwand (1) und das Flüssigkeitsaufnahme- und - leitungselement (2) bildet.

9. Zitrusfruchtpresse nach einem der Ansprüche 2 bis 8, **dadurch gekennzeichnet, dass** das biegbare Polymer mit Platin katalysiertes Silikon ist.

## Revendications

1. Un presse-agrumes du genre comportant une cavité adaptée pour y recevoir une partie découpée d'agrume, ayant une paroi latérale annulaire flexible (1) configurée pour entourer et envelopper cette partie découpée d'agrume, et en mesure d'être poussée contre cette partie découpée d'agrume pour la presser et un élément pour y recevoir et acheminer le liquide (2) pourvu d'une sortie (3) pour le jus pressé, cette paroi latérale annulaire flexible (1) ayant un premier bord (1a) relié a un périmètre de cet élément pour recevoir et acheminer le liquide (2), formant un fond pour cette cavité et un deuxième bord opposé (1 b) formant une bouche pour la cavité, **caractérisé en ce que** la paroi latérale annulaire flexible (1) définit un étranglement (4) entre ce premier bord (1a) relié à l'élément pour recevoir et acheminer le liquide (2) et ce deuxième bord (1 b) formant cette bouche.

2. Le presse-agrumes conformément à la revendication 1, **caractérisé en ce que** la paroi latérale annulaire flexible (1) et l'élément pour recevoir et acheminer le liquide (2) font partie intégrante d'une pièce qui est moulée en polymère flexible.

3. Le presse-agrumes conformément à la revendication 1 ou 2, **caractérisé en ce qu'**une pluralité de plis axiaux (9) sont aménagés autour de cet étranglement (4), en formant un plissement de la paroi latérale annulaire flexible (1).

4. Le presse-agrumes conformément à la revendication 1 ou 2, **caractérisé en ce que** cette sortie (3) a une taille permettant de retenir les pépins de la partie découpée d'agrume.

5. Le presse-agrumes conformément à la revendication 4, **caractérisé en ce que** la sortie (3) a la forme d'au moins une fente (7) adaptée pour être ouverte par déformation élastique du matériau de l'élément pour recevoir et acheminer le liquide (2) suite à la pression exercée par le jus pressé de l'intérieur de la cavité.

6. Le presse-agrumes conformément à la revendication 5, **caractérisé en ce que** cette au moins une fente (7) est formée dans une portion en forme de diaphragme (8) définie dans l'élément pour recevoir et acheminer le liquide (2), cette portion en forme de diaphragme (8) étant convexe vers l'intérieur de la cavité à défaut de pression et adaptée pour être fléchie vers l'extérieur par cette pression exercée par le jus pressé de l'intérieur de la cavité.

7. Le presse-agrumes conformément à la revendication 4, **caractérisé en ce que** la sortie (3) est formée comme un bec (12) adapté pour être fermé au moyen d'un capuchon (5).

8. Le presse-agrumes conformément à la revendication 7, **caractérisé en ce que** ce capuchon (5) est fixé à la cavité au moyen d'un raccord flexible (6), le capuchon (5) et ce raccord (6) font partie intégrante de la même pièce formant la paroi latérale annulaire flexible (1) et l'élément pour recevoir et acheminer le liquide (2).

9. Le presse-agrumes conformément à une quelconque des revendications 2 à 8, **caractérisé en ce que** ce polymère flexible est du silicone catalysé au platine.
